(19) Europäisches Patentamt / European Patent Office / Office européen des brevets

(11) **EP 3 565 747 B1**

(12) **FASCICULE DE BREVET EUROPEEN**

(45) Date de publication et mention de la délivrance du brevet:
**28.09.2022 Bulletin 2022/39**

(21) Numéro de dépôt: **17828981.5**

(22) Date de dépôt: **20.12.2017**

(51) Classification Internationale des Brevets (IPC):
**B60W 20/12** *(2016.01)*   **B60W 10/06** *(2006.01)*
**B60W 10/08** *(2006.01)*   **B60W 50/00** *(2006.01)*

(52) Classification Coopérative des Brevets (CPC):
**B60W 20/12; B60W 10/06; B60W 10/08; B60W 50/0097;** B60W 2050/0013; B60W 2050/0075; B60W 2510/0623; B60W 2510/244; B60W 2552/05; B60W 2552/15; B60W 2552/20; B60W 2552/30; B60W 2555/60; B60W 2556/10; B60W 2556/50;   (Cont.)

(86) Numéro de dépôt international:
**PCT/FR2017/053718**

(87) Numéro de publication internationale:
**WO 2018/127644 (12.07.2018 Gazette 2018/28)**

(54) **PROCÉDÉ DE CALCUL D'UNE CONSIGNE DE GESTION DE LA CONSOMMATION EN CARBURANT ET EN COURANT ÉLECTRIQUE D'UN VÉHICULE AUTOMOBILE HYBRIDE**

VERFAHREN ZUR BERECHNUNG EINES VERWALTUNGSSOLLWERTS ZUR VERWALTUNG DES KRAFTSTOFF- UND STROMVERBRAUCHS EINES HYBRIDKRAFTFAHRZEUGS

METHOD FOR CALCULATING A MANAGEMENT SETPOINT FOR MANAGING THE FUEL AND ELECTRIC POWER CONSUMPTION OF A HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.01.2017 FR 1750110**

(43) Date de publication de la demande:
**13.11.2019 Bulletin 2019/46**

(73) Titulaire: **Renault s.a.s**
**92100 Boulogne Billancourt (FR)**

(72) Inventeurs:
• **OURABAH, Abdel-Djalil**
**75013 Paris (FR)**
• **QUOST, Benjamin**
**60200 Compiègne (FR)**

• **DENOEUX, Thierry**
**60200 Compiègne (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A2- 2 857 271      WO-A1-2014/177786**
**DE-A1- 10 226 143      DE-A1-102014 210 539**
**DE-A1-102015 209 883**

(52) Classification Coopérative des Brevets (CPC):
(Cont.)
Y02T 10/40; Y02T 10/62; Y02T 10/70; Y02T 10/84

**Description**

DOMAINE TECHNIQUE AUQUEL SE RAPPORTE L'INVENTION

La présente invention concerne de manière générale les véhicules hybrides rechargeables.

Elle concerne plus particulièrement un procédé de calcul d'une consigne de gestion de la consommation en carburant et en courant électrique d'un véhicule automobile hybride comportant au moins un moteur électrique alimenté en courant électrique par une batterie de traction, et un moteur à combustion interne alimenté en carburant.

L'invention trouve une application particulièrement avantageuse dans les véhicules hybrides à grande autonomie électrique, c'est-à-dire dans les véhicules susceptibles de rouler à l'aide de leur seul moteur électrique sur une distance au moins supérieure à 10 kilomètres.

ARRIERE-PLAN TECHNOLOGIQUE

Un véhicule hybride rechargeable comporte une chaîne de traction thermique conventionnelle (avec un moteur à combustion interne et un réservoir de carburant) et une chaîne de traction électrique (avec un moteur électrique et une batterie de traction pouvant être mise en charge sur une prise de courant).

Un tel véhicule hybride est susceptible d'être tracté par sa seule chaîne de traction électrique, ou par sa seule chaîne de traction thermique, ou encore simultanément par ses deux chaînes de traction électrique et thermique. Il est également possible de recharger la batterie de traction en profitant de la puissance développée par le moteur à combustion interne, ou encore en récupérant l'énergie cinétique développée par le véhicule automobile au freinage.

Du fait de la méconnaissance du futur trajet du véhicule, la stratégie actuellement implémentée pour utiliser l'une ou l'autre des chaînes de traction consiste à systématiquement commencer par décharger la batterie de traction au début du trajet jusqu'à atteindre un niveau d'énergie minimal, puis à utiliser ensuite la chaîne de traction thermique. De cette manière, lorsque le conducteur réalise des trajets courts et qu'il a régulièrement la possibilité de recharger la batterie de traction, il utilise au maximum la chaîne de traction électrique, ce qui réduit les émissions polluantes du véhicule.

Cette stratégie ne garantit toutefois pas toujours une consommation en carburant minimale. C'est notamment le cas lorsque l'usager commence un trajet par une partie autoroutière et qu'il le termine par une partie en ville. En effet, l'utilisation de la chaîne de traction électrique est peu adaptée sur autoroute puisque la batterie de traction s'y décharge très vite, et l'utilisation de la chaîne de traction thermique est peu adaptée en ville puisque le rendement du moteur à combustion interne est plus faible en ville que sur autoroute.

Dans le but de pallier cet inconvénient, le document US8825243 propose de construire une courbe de décharge « idéale » de la batterie, sur la base d'une prédiction de trajet connue par un système de navigation. Cette courbe est alors construite de telle sorte que l'état de charge de la batterie n'atteigne sa valeur minimum autorisée qu'en fin de trajet. Le système hybride peut alors être piloté conformément à cette prédiction de trajet, de façon à suivre au mieux cette courbe de décharge. L'inconvénient d'une telle solution est qu'en cas de diversité importante des conditions de route sur le trajet (par exemple le cas simple mais très courant où l'on commence sur un premier tronçon en ville, puis on poursuit sur un deuxième tronçon d'autoroute et enfin on termine sur un troisième tronçon en ville), le trajet est effectué de manière non optimale du point de vue de la consommation énergétique.

L'utilisation de la chaîne de traction thermique en ville s'avère en outre moins agréable pour le conducteur que celle de la chaîne de traction électrique.

Enfin, la législation empêche parfois l'utilisation du moteur à combustion interne en ville, de sorte que le conducteur n'a alors plus accès à la ville.

Afin de remédier à ces divers inconvénients, la demanderesse a développé une première solution technique qui est décrite en détail dans une demande de brevet déposée à l'INPI sous la référence FR1556271 (cette demande étant non encore publiée au moment du dépôt de la présente demande de brevet).

Cette première solution technique consiste, en résumé, à :

- déterminer, au moyen d'un système de navigation, quelles seront les caractéristiques de chaque tronçon du trajet saisi,
- déterminer, pour chacun de ces tronçons, quelle sera la relation mathématique reliant la consommation en carburant du moteur à combustion interne à la consommation en courant du moteur électrique,
- choisir un point optimal de la relation mathématique pour chaque tronçon de façon à ce que le profil de consommation en carburant soit le plus adapté au trajet à effectuer.

Autrement formulé, cette première solution technique permet d'anticiper les évènements de la route, tels que les phases de descente, de montée, de roulage sur autoroute et en ville, et de calculer à l'avance la meilleure utilisation des ressources électriques afin de réduire la consommation en carburant du véhicule sur l'ensemble du trajet.

L'inconvénient de cette première solution technique est qu'il arrive que des facteurs imprévus viennent augmenter la consommation énergétique de véhicule, de sorte que le profil de consommation en carburant imaginé n'est plus correct. Le risque est alors que la batterie ne soit plus en mesure de fournir la quantité d'énergie électrique souhaitée, ce qui augmente alors la consommation en carburant du moteur.

La solution selon la demande WO 2014/177786A1 présente les mêmes inconvénients.

OBJET DE L'INVENTION

Afin de remédier à l'inconvénient précité de l'état de la technique, la présente invention propose de rendre le système plus robuste aux perturbations qui sont liées à des facteurs imprévus et qui modifient la consommation énergétique du véhicule.

Plus particulièrement, on propose selon l'invention un procédé de calcul tel que défini dans l'introduction, dans lequel il est prévu des étapes de :

a) acquisition, au moyen d'un système de navigation, d'un trajet à effectuer,

b) division dudit trajet en tronçons successifs,

c) acquisition, pour chaque tronçon, d'attributs caractérisant ledit tronçon,

d) pour chacun desdits tronçons et compte tenu de ses attributs, acquisition d'une relation reliant la consommation estimée en carburant du véhicule automobile hybride sur le tronçon à sa consommation estimée en énergie électrique,

e) mesure de la consommation réelle en carburant et la consommation réelle en énergie électrique du véhicule automobile,

f) correction, compte tenu desdites consommations réelles en carburant et en énergie électrique, de chaque relation,

g) détermination d'un point optimal de consommation dans chacune des relations corrigées, et

h) élaboration d'une consigne de gestion énergétique tout le long du trajet, en fonction des coordonnées desdits points optimaux.

La mesure de la consommation énergétique réelle du véhicule (en carburant et en énergie électrique) permet alors de corriger « en temps réel » la prédiction de la consommation énergétique sur l'ensemble du trajet restant.

Cette correction permet alors d'obtenir une meilleure prédiction, qui n'est pas faussée par des facteurs imprévus tels que par exemple :

- l'augmentation de la charge du véhicule (due au nombre de personnes embarquées dans le véhicule, au chargement du coffre, à l'accroche d'une remorque...),
- l'augmentation des forces résistant à l'avance du véhicule (due à l'installation d'un bagage sur le toit du véhicule, ou à l'ouverture des vitres, ou à un pneu dégonflé...),
- le vieillissement des composants du véhicule (dû à une dégradation du moteur à combustion interne, de la batterie de traction, du moteur électrique...).
- les variations de température, dont on sait qu'elles impactent les rendements de la batterie de traction et du moteur à combustion interne.

Par conséquent, l'invention permet de rendre le système plus robuste aux perturbations externes et au vieillissement des composants du véhicule.

Elle permet en outre de réduire l'écart entre la consommation estimée affichée au conducteur au début du trajet et la consommation réelle affichée une fois arrivée à destination.

De ce fait, cette solution permet d'augmenter la confiance du conducteur dans le système, ce qui peut le pousser à tenter de réduire davantage sa consommation énergétique.

Enfin, dans le cas où le véhicule automobile doit passer par des zones interdites aux véhicules polluants, cette solution permet d'arriver dans ces zones avec une batterie de traction suffisamment chargée pour traverser ces zones à l'aide du seul moteur électrique.

D'autres caractéristiques avantageuses et non limitatives du procédé de calcul conforme à l'invention sont les suivantes :

- l'étape d) comporte la sélection, parmi une pluralité de relations prédéterminées reliant des valeurs de consommation en carburant à des valeurs de consommation d'énergie électrique, de la relation qui correspond aux attributs caractérisant ledit tronçon ;
- les relations prédéterminées sont des polynômes et l'étape f) consiste à réviser la valeur de l'ordonnée au point

4

d'origine du polynôme sélectionné ;
- la valeur de l'ordonnée du polynôme sélectionné est révisée en y ajoutant un variable égale à la différence entre, d'une part, la valeur de l'ordonnée au point d'origine d'un polynôme reliant la consommation réelle en carburant du véhicule automobile hybride à sa consommation réelle en énergie électrique sur au moins une partie d'un tronçon déjà emprunté, et d'autre part, la valeur de l'ordonnée au point d'origine du polynôme sélectionné sur ladite au moins une partie du tronçon déjà emprunté ;
- les polynômes sont de second ordre, et les variations de charge et décharge de la batterie de traction sont bornées entre un seuil minimal et un seuil maximal ;
- lesdits polynômes présentent deux coefficients invariables et une valeur d'ordonnée au point d'origine qui varie d'un polynôme à l'autre ;
- à l'étape d), la relation est sélectionnée indépendamment de la pente dudit tronçon, et, préalablement à l'étape f), il est prévu une étape d1) de correction de ladite relation compte tenu de ladite pente ;
- à l'étape d), la relation est sélectionnée indépendamment de la façon de conduire du conducteur du véhicule automobile, et, préalablement à l'étape f), il est prévu une étape d3) de correction de ladite relation compte tenu de ladite façon de conduire du conducteur du véhicule automobile ;
- à l'étape d), la relation est sélectionnée indépendamment de la consommation en courant électrique d'appareils auxiliaires qui sont distincts du moteur électrique et qui sont alimentés en courant par la batterie de traction, et, préalablement à l'étape f), il est prévu une étape d2) de correction de ladite relation compte tenu de ladite consommation en courant électrique des appareils auxiliaires ; et
- à l'étape g), les points optimaux sont choisis de telle sorte qu'ils minimisent la consommation en carburant du véhicule automobile hybride sur l'ensemble du trajet et maximisent la décharge de la batterie de traction à l'issue dudit trajet.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 est un tableau illustrant les valeurs d'attributs caractérisant des tronçons d'un trajet qu'un véhicule doit effectuer ;
- la figure 2 est un tableau illustrant les paramètres de courbes de référence caractérisant les tronçons du trajet à effectuer ;
- la figure 3 est un graphique illustrant la répartition de courbes de consommation spécifique acquises lors de roulages de test ;
- la figure 4 est un graphique illustrant plusieurs courbes de référence ;
- la figure 5 est un tableau associant à chaque valeur d'attribut affecté à un tronçon, une probabilité que ce tronçon soit associé à l'une ou l'autre des courbes de référence de la figure 4 ;
- la figure 6 est un graphique illustrant les corrections à apporter à une courbe de référence, compte tenu de la consommation électrique d'appareils auxiliaires du véhicule ;
- la figure 7 est un graphique illustrant les corrections à apporter à une courbe de référence, compte tenu de la pente du tronçon du trajet correspondant ou du comportement du conducteur ;
- la figure 8 est un graphique illustrant différents points pour chaque courbe de référence associé à chaque tronçon et d'une courbe passant par les points optimaux de ces courbes de référence ; et
- la figure 9 est un organigramme illustrant la manière selon laquelle le procédé de calcul conforme à l'invention peut être mis en œuvre.

Classiquement, un véhicule automobile comporte un châssis qui supporte notamment un groupe motopropulseur, des éléments de carrosserie et des éléments d'habitacle.
Dans un véhicule hybride rechargeable, le groupe motopropulseur comporte une chaîne de traction thermique et une chaîne de traction électrique.
La chaîne de traction thermique comporte notamment un réservoir de carburant et un moteur à combustion interne alimenté par le réservoir.
La chaîne de traction électrique comporte quant à elle une batterie de traction et un ou plusieurs moteur(s) électrique(s) alimentés en courant électrique par la batterie de traction.
Le véhicule automobile comporte ici aussi une prise de courant permettant de mettre en charge localement la batterie de traction, par exemple sur le réseau électrique d'une habitation ou sur tout autre réseau électrique.
Le véhicule automobile comporte également des appareils auxiliaires, qui sont ici définis comme des appareils électriques alimentés en courant par la batterie de traction.

Parmi ces appareils auxiliaires, on peut citer le moteur de climatisation, les moteurs des vitres électriques, ou encore le système de géolocalisation et de navigation.

Ce système de géolocalisation et de navigation comporte classiquement une antenne permettant de recevoir des signaux relatifs à la position géolocalisée du véhicule automobile, une mémoire permettant de stocker une cartographie d'un pays ou d'une région, et un écran permettant d'illustrer la position du véhicule sur cette cartographie.

Ici, on considérera le cas où cet écran est tactile pour permettre au conducteur d'y saisir des informations. Il pourrait bien entendu en être autrement.

Enfin, le système de géolocalisation et de navigation comporte un contrôleur permettant de calculer un trajet à effectuer compte tenu des informations saisies par le conducteur, de la cartographie stockée dans sa mémoire, et de la position du véhicule automobile.

Le véhicule automobile 1 comprend par ailleurs une unité électronique de commande (ou ECU pour "Electronic Control Unit"), appelée ici calculateur, permettant notamment de commander les deux chaînes de traction précitées (notamment les puissances développées par le moteur électrique et par le moteur à combustion interne).

Dans le contexte de la présente invention, ce calculateur est connecté au contrôleur du système de géolocalisation et de navigation, de manière que ces deux éléments peuvent se communiquer des informations.

Ici, ils sont connectés ensemble par le réseau principal de communication inter-organes du véhicule (typiquement par le bus CAN).

Le calculateur comprend un processeur et une unité de mémorisation (appelée ci-après mémoire).

Cette mémoire enregistre des données utilisées dans le cadre du procédé décrit ci-dessous.

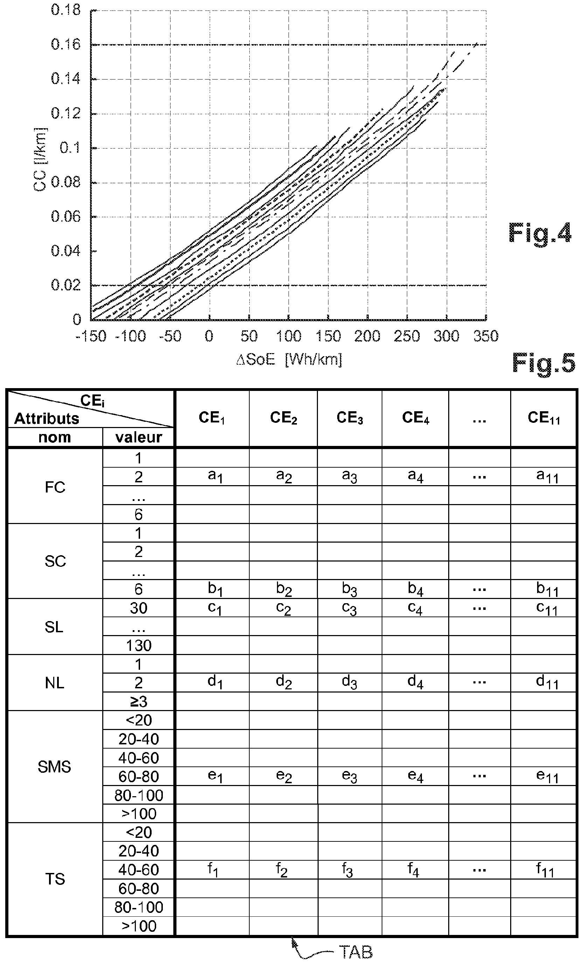

Elle enregistre notamment un tableau du type de celui illustré sur la figure 5 (qui sera détaillé dans la suite de cet exposé).

Elle enregistre également une application informatique, constituée de programmes d'ordinateur comprenant des instructions dont l'exécution par le processeur permet la mise en œuvre par le calculateur du procédé décrit ci-après.

Pour la mise en œuvre de l'invention, le calculateur est ici connecté à plusieurs capteurs, qui permettent notamment de connaître la consommation instantanée en carburant du moteur à combustion interne, la consommation instantanée en courant électrique du ou des moteur(s) électrique(s), la consommation instantanée en courant électrique des appareils auxiliaires, et le comportement de conduite (sportif, classique, calme,...) du conducteur du véhicule automobile.

A titre liminaire, on définira ici plusieurs notions utilisées dans l'exposé du procédé décrit ci-après.

On pourra ainsi définir le terme « trajet » comme étant un chemin que le véhicule automobile doit emprunter pour se rendre à une station d'arrivée.

Cette station d'arrivée, but du trajet, sera considérée comme étant équipée d'une station de charge permettant de recharger la batterie de traction via la prise de courant équipant le véhicule.

Chaque trajet pourra être découpé en « segments adjacents » ou en « tronçons adjacents ».

La notion de segments sera celle nativement utilisée par le contrôleur équipant le système de géolocalisation et de navigation.

En pratique, chaque segment correspond à une partie du trajet qui s'étend entre deux intersections de routes. Pour définir le trajet le plus court ou le plus rapide, le contrôleur va donc déterminer par quels segments de routes le trajet doit passer.

La notion de tronçons est différente. Elle sera bien détaillée dans la suite de cet exposé. Pour simplifier, chaque tronçon du trajet correspond à une partie du trajet sur laquelle les caractéristiques de la route n'évoluent pas sensiblement. A titre d'exemple, le trajet pourrait ainsi être découpé en plusieurs tronçons sur chacun desquels la vitesse maximale autorisée est constante.

On considérera ici que le trajet est formé de N tronçons $T'_i$, i étant un entier compris entre 1 et N.

Ces tronçons sont caractérisés par des paramètres appelés « attributs cr ». Des exemples d'attributs cr permettant de caractériser chaque tronçon sont les suivants.

Un premier attribut sera la « catégorie de route FC ». Les contrôleurs équipant les systèmes de géolocalisation et de navigation utilisent généralement ce genre de catégories pour distinguer les différents types de routes. Ici, cette catégorie pourra prendre une valeur entière comprise entre 1 et 6 (par exemple). Un attribut égal à 1 pourra correspondre à une autoroute, un attribut égal à 2 pourra correspondre à une route nationale, ...

Un second attribut sera la « pente RG » du tronçon, exprimée en degrés ou en pourcentage.

Les troisième, quatrième, cinquième et sixième attributs seront relatifs à des vitesses caractéristiques des véhicules empruntant le tronçon.

Le troisième attribut sera la « catégorie de vitesse SC » du tronçon. Les contrôleurs équipant les systèmes de géolocalisation et de navigation utilisent généralement aussi ce genre de catégories pour distinguer les différents types de routes. Ici, cette catégorie pourra prendre une valeur entière comprise entre 1 et 6. Un attribut égal à 1 pourra correspondre à une route à grande vitesse (supérieure à 120 km/h), un attribut égal à 2 pourra correspondre à une route à vitesse élevée (comprise entre 100 et 120 km/h), ...

Le quatrième attribut sera la « vitesse maximum autorisée SL » sur le tronçon.

Le cinquième attribut sera la « vitesse moyenne SMS » constatée sur le tronçon (dont la valeur est issue d'une mesure statistique effectuée sur chaque route).

Le sixième attribut sera la « vitesse instantanée TS » constatée sur le tronçon (dont la valeur est issue d'un système d'information sur l'état du trafic en temps réel).

Le septième attribut sera la « longueur LL » du tronçon.

Le huitième attribut sera le « rayon de courbure moyen LC » du tronçon.

Le neuvième attribut sera le « nombre de voies NL » du tronçon dans le sens de circulation emprunté par le véhicule.

Dans l'exposé qui suit, on utilisera ces neuf attributs pour caractériser chaque tronçon du trajet.

En variante, on pourra caractériser chaque tronçon du trajet par un nombre restreint ou plus important d'attributs cr.

On définira par ailleurs l'état d'énergie SOE (de l'anglais « state of energy ») de la batterie de traction comme étant un paramètre permettant de caractériser l'énergie restante dans cette batterie de traction. En variante, on pourra utiliser un autre paramètre tel que l'état de charge SOC de la batterie (de l'anglais « state of charge ») ou tout autre paramètre du même type (résistance interne de la batterie, tension aux bornes de la batterie, ...).

La charge ou la décharge $\Delta$SOE de la batterie de traction sera alors considérée égale à la différence entre deux états d'énergie considérés à deux moments distincts.

On définit alors la « courbe de consommation spécifique » du véhicule sur un tronçon considéré comme étant une courbe qui associe à chaque valeur de consommation en carburant CC du véhicule une valeur de charge ou décharge $\Delta$SOE de la batterie de traction. En effet, sur un tronçon déterminé, il est possible d'estimer quelle sera la consommation en carburant CC du véhicule (en litre par kilomètre parcouru) et la charge ou décharge $\Delta$SOE de la batterie de traction en (Watt-heure par kilomètre). Ces deux valeurs seront liées par une courbe, puisqu'elles varieront selon que l'on utilise plutôt la chaîne de traction électrique ou plutôt la chaîne de traction thermique pour faire avancer le véhicule.

Puisqu'il existe une infinité de courbes de consommation spécifique, on définit enfin les « courbes de référence » comme étant des courbes de consommation spécifique particulières, dont on connaîtra bien les caractéristiques et qui permettront d'approximer chaque courbe de consommation spécifique. Autrement formulé, comme cela apparaîtra plus clairement dans la suite de cet exposé, on associera à chaque tronçon de trajet non pas une courbe de consommation spécifique, mais plutôt une courbe de référence (celle qui constituera la meilleure approximation de la courbe de consommation spécifique).

Dans la suite de cet exposé, nous distinguerons par ailleurs les informations estimées, portant l'indice « est », des informations mesurées, portant l'indice « mes ». Ainsi, une même information pourra être estimée d'une part et mesurée d'autre part.

Le procédé, qui est mis en œuvre conjointement par le contrôleur du système de géolocalisation et de navigation et par le calculateur du véhicule, est un procédé de calcul d'une consigne de gestion de la consommation en carburant et en courant électrique du véhicule.

Ce procédé consiste plus précisément à déterminer comment, sur un trajet prédéfini, il faudra utiliser la chaîne de traction électrique et la chaîne de traction thermique afin, par exemple, de réduire au mieux la consommation en carburant du véhicule ainsi que ses émissions polluantes sur l'ensemble du trajet.

Selon une caractéristique particulièrement avantageuse de l'invention, le procédé comprend en résumé les étapes principales suivantes :

- acquisition du trajet à parcourir,
- division du trajet en tronçons $T^i$ adjacents successifs,
- acquisition, pour chaque tronçon $T^i$, d'attributs FC, SC, SL, TS, RG, LL NL, SMS caractérisant ce tronçon $T^i$,
- détermination, pour chacun des tronçons $T^i$, compte tenu des attributs FC, SC, SL, TS, RG, LL NL, SMS de ce tronçon $T^i$, d'une relation (appelée ici courbe de référence $CE_j$) reliant chaque valeur de consommation en carburant CC du véhicule automobile hybride sur le tronçon à une valeur de charge ou décharge $\Delta$SOE de la batterie de traction,
- mesure de la consommation réelle en carburant $CC_{mes}$ et de la consommation réelle en énergie électrique $\Delta SOE_{mes}$ du véhicule automobile,
- correction, compte tenu desdites consommations réelles en carburant $CC_{mes}$ et en énergie électrique $\Delta SOE_{mes}$, de ladite courbe de référence CEj,
- détermination d'un point optimal P' de chaque courbe de référence CEj corrigée, permettant par exemple de minimiser la consommation en carburant du véhicule automobile hybride sur l'ensemble du trajet et d'obtenir une décharge complète de la batterie de traction à l'issue dudit trajet, et
- élaboration d'une consigne de gestion énergétique en fonction des coordonnées desdits points optimaux P'.

Ces étapes sont détaillées dans la suite de cet exposé. Certaines d'entre elles pourront être mises en œuvre régulièrement, par exemple à pas de temps réguliers le long du trajet du véhicule, pour corriger au mieux les prédictions de consommation énergétique en fonction des consommations énergétiques constatées sur une partie au moins du trajet déjà effectuée.

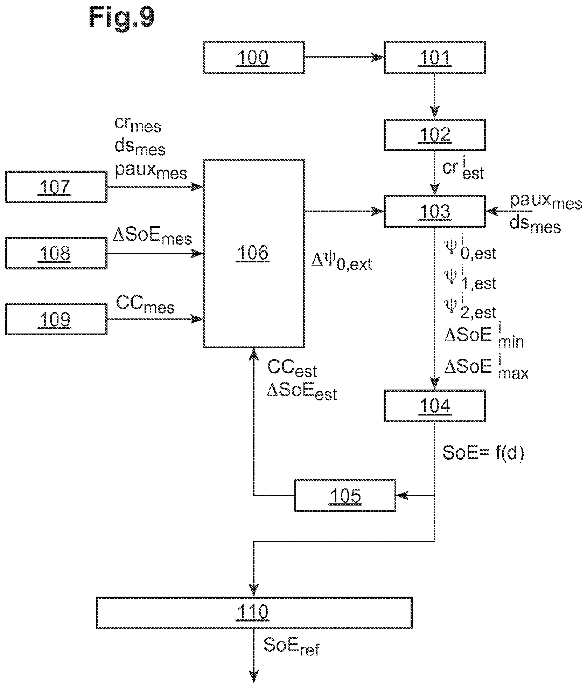

Comme le montre la figure 9, la première étape 100 consiste à acquérir le trajet que le véhicule automobile doit effectuer.

Cette étape pourra être opérée au moyen du contrôleur embarqué dans le système de géolocalisation et de navigation, au moment du démarrage du véhicule automobile.

Cette étape est alors mise en œuvre de manière classique.

Ainsi, lorsque le conducteur utilise l'écran tactile du système de géolocalisation et de navigation pour définir une station d'arrivée, le contrôleur de ce système calcule le trajet à effectuer, en fonction notamment des paramètres de roulage sélectionnés par le conducteur (trajet le plus rapide, trajet le plus court,...).

A ce stade, on pourra noter que l'ensemble du procédé devra être réinitialisé dès lors que le véhicule emprunte un trajet différent de celui défini par le système de géolocalisation et de navigation, ou encore lorsque les conditions changent, comme le trafic.

En variante, cette première étape 100 pourra être réalisée autrement.

Ainsi, il sera possible de s'affranchir de la saisie par le conducteur de la station d'arrivée sur l'écran tactile. Pour cela, le contrôleur pourra détecter les habitudes du conducteur et en déduire automatiquement la station d'arrivée.

Par exemple, lorsque le conducteur emprunte chaque jour de la semaine le même trajet pour aller travailler, ce trajet peut être automatiquement acquis sans que le conducteur n'ait à saisir une quelconque information sur l'écran tactile du système de géolocalisation et de navigation.

A l'issue de cette première étape, le contrôleur embarqué dans le système de géolocalisation et de navigation connaît le trajet du véhicule, qui est alors composé d'une pluralité de segments adjacents, dont on rappelle qu'ils s'étendent chacun entre deux intersections de route.

La seconde étape 101 consiste à diviser le trajet en tronçons $T^i$.

L'intérêt de re-diviser le trajet non plus en segments mais en tronçons est tout d'abord de réduire le nombre de subdivisions du trajet. En effet, il arrive souvent que les attributs de deux segments successifs soient identiques. Si on traitait séparément ces deux segments successifs, on multiplierait inutilement la durée des calculs. En rassemblant les segments identiques au sein d'un même tronçon, on va pouvoir réduire la durée des calculs.

Un autre intérêt est que les caractéristiques de la route sur un même segment peuvent varier sensiblement (une partie du segment peut correspondre à une route de pente nulle et une autre partie de ce segment peut correspondre à une route de pente importante). Ici, on souhaite diviser le trajet en tronçons sur chacun desquels les caractéristiques de la route restent homogènes.

Chaque tronçon $T^i$ sera ici défini comme étant une portion du trajet qui comporte au moins un attribut invariable sur toute sa longueur.

Cet attribut pourra être constitué par la pente RG et/ou par la catégorie de vitesse SC et/ou par la catégorie de route FC.

Ici, cette étape sera mise en œuvre par le contrôleur embarqué dans le système de géolocalisation et de navigation. Il découpera à cet effet le trajet en tronçons T' de longueurs maximum sur lesquels les trois attributs précités (RG, SC, FC) sont constants.

A l'issue de cette seconde étape, le contrôleur a ainsi défini N tronçons.

La troisième étape 103 consiste à acquérir les attributs $cr_{est}^i$ de chaque tronçon $T^i$.

Lorsque l'un des attributs sera variable sur le tronçon considéré, c'est la valeur moyenne de cet attribut sur l'ensemble du tronçon qui sera considérée.

En pratique, cette troisième étape est réalisée de la manière suivante.

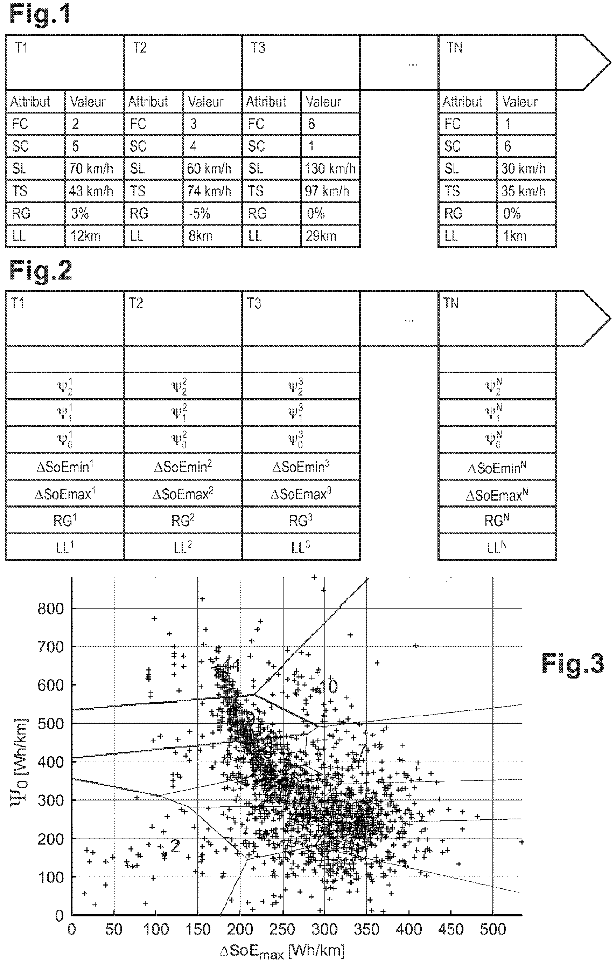

Tout d'abord, le contrôleur embarqué dans le système de géolocalisation et de navigation informe le calculateur qu'un nouveau trajet a été calculé. Le calculateur demande alors l'envoi des attributs de chaque tronçon, sous la forme par exemple d'un tableau du type de celui illustré sur la figure 1.

Le contrôleur acquiert alors les attributs de chaque tronçon de la manière suivante.

Il en calcule une partie, notamment la longueur LL du tronçon.

Il en lit une autre partie dans la mémoire du système de géolocalisation et de navigation, notamment la catégorie de route FC, la pente RG, la catégorie de vitesse SC, la vitesse maximum autorisée SL, la vitesse moyenne SMS, le rayon de courbure moyen LC, et le nombre de voies NL.

Il se fait communiquer une dernière partie de ces attributs par un autre appareil, notamment la vitesse instantanée TS que lui communique le système d'information sur l'état du trafic en temps réel.

Le contrôleur transmet ensuite l'ensemble de ces informations au calculateur principal du véhicule, via le bus CAN.

L'avantage d'utiliser le contrôleur embarqué dans le système de géolocalisation et de navigation plutôt que le calculateur principal du véhicule pour opérer les trois premières étapes est de réduire le nombre d'informations à transmettre au calculateur par le bus CAN. En effet, en fusionnant les segments adjacents du trajet qui présentent les mêmes attributs, le volume des données transmises est réduit, ce qui accélère la transmission des données par le bus CAN.

Dès réception de ces attributs $cri_{est}$, le calculateur met en œuvre les étapes restantes du procédé.

La quatrième étape 103 consiste à déterminer, pour chacun des tronçons $T_i$, la relation qui permettra d'estimer au mieux la consommation énergétique (en carburant et en courant) du véhicule sur le tronçon $T_i$ considéré.

Cette quatrième étape 103 est ici réalisée en :

- sélectionnant, parmi les courbes de référence CEj enregistrées dans la mémoire du calculateur, celle qui permettra d'estimer au mieux la consommation énergétique du véhicule sur le tronçon T' considéré, puis en
- corrigeant la courbe de référence CEj sélectionnée afin de prendre en compte toutes les données nécessaires pour assurer une bonne fiabilité au procédé.

Cette quatrième étape 103 permet alors de passer d'une caractérisation de chaque tronçon par des attributs, à une caractérisation par un coût énergétique.

Elle est ici mise en œuvre en cinq opérations successives.

Au cours d'une première opération du présent exemple de réalisation, le calculateur va utiliser le tableau TAB illustré sur la figure 5, qui est enregistré dans sa mémoire.

Comme le montre cette figure 5, ce tableau TAB présente des lignes qui correspondent chacune à une valeur (ou à un intervalle de valeurs) d'un attribut. Il présente des colonnes correspondant chacune à l'une des courbes de référence $CE_j$. Dans l'exemple illustré, on considèrera que la mémoire du calculateur stocke M courbes de référence $CE_j$, avec M ici égal à onze. L'indice j est donc un entier compris entre 1 et 11.

Sur la figure 5, les cases du tableau TAB sont laissées vides puisque les valeurs qu'elles comporteront dépendront des caractéristiques du véhicule.

En pratique, ce tableau TAB sera mémorisé dans la mémoire du calculateur avec des valeurs dans chacune de ces cases.

Ces valeurs seront des valeurs de probabilité (comprises entre 0 et 1) correspondant à la probabilité que chaque valeur d'attribut corresponde à l'une ou l'autre des courbes de référence CEj.

A titre d'exemple, si la catégorie de route FC d'un tronçon $T^i$ présente une valeur égale à 2, on pourra lire dans le tableau que la probabilité que ce tronçon soit bien caractérisé en termes de coût énergétique par la courbe de référence CE1 sera égale à ai, que la probabilité que ce tronçon soit bien caractérisé en termes de coût énergétique par la courbe de référence CE2 sera égale à a2, ...

On notera que les valeurs des pentes RG et de longueur LL n'ont pas été, à dessein, utilisées dans ce tableau TAB.

A ce stade, le calculateur peut alors relever chaque valeur de probabilité correspondant à la valeur de chaque attribut du tronçon $T^i$ considéré.

Sur l'exemple illustré, où on considère que l'attribut FC est égal à 2, que l'attribut SC est égal à 6, que l'attribut SL est égal à 30, que l'attribut NL est égal à 2, que l'attribut SMS est compris entre 60 et 80 et que l'attribut TS est compris entre 40 et 60, le calculateur relève les valeurs notées ai à $a_{11}$, bi à $b_{11}$, $c_1$ à $c_{11}$, $d_1$ à $d_{11}$, $e_1$ à $e_{11}$, et $f_1$ à $f_{11}$.

Le calculateur fait ensuite la somme des probabilités que le tronçon $T^i$ considéré soit bien caractérisé en termes de coût énergétique par chacune des onze courbes de référence CEj.

Sur l'exemple illustré, le calculateur somme à cet effet les valeurs notées ai à fi, puis $a_2$ à $f_2$, ...

Enfin, le calculateur détermine laquelle des onze sommes donne le résultat le plus élevé.

Alors, il considère que la courbe de référence CEj à laquelle est associée cette somme de probabilité élevée est celle qui caractérise le mieux le tronçon $T^i$ en terme de coût énergétique.

Le calculateur peut alors acquérir dans sa mémoire les valeurs des paramètres caractérisant cette courbe de référence CEj.

A ce stade de l'exposé, on peut s'intéresser plus précisément à la manière selon laquelle ces courbes de référence sont obtenues et modélisées.

Pour chaque modèle de véhicule (ou pour chaque modèle de moteurs, ou pour chaque ensemble de modèles de voitures, ou pour chaque ensemble de modèle de moteurs), il est nécessaire de réaliser un grand nombre de roulages tests (ou de simulation de roulages tests) sur différents tronçons de route géolocalisés.

Ces roulages tests permettent de déterminer la consommation en carburant et en courant électrique du véhicule sur différents tronçons dont les attributs sont connus. Pour cela, on fait évoluer le véhicule plusieurs fois sur chaque tronçon en augmentant à chaque fois la part de la traction développée par le moteur électrique.

Il est alors possible de générer une courbe de consommation spécifique CCS pour chaque tronçon. Ces courbes de consommation spécifique sont du type des courbes illustrées sur la figure 4.

On peut observer sur chacune de ces courbes que plus on utilise de l'énergie électrique (soit un ΔSoE < 0) plus la consommation de carburant baisse jusqu'à atteindre 0 lors d'un roulage en utilisant exclusivement la chaîne de traction électrique. A l'inverse plus on cherche à recharger la batterie via le moteur thermique ($\Delta SoE > 0$) plus la consommation de carburant augmente. Enfin, on rappellera que chaque courbe de consommation spécifique CCS décrit la consommation énergétique moyenne du véhicule pour la situation d'un roulage sur route horizontale (pente nulle), sans consommation électrique des appareils auxiliaires.

Ces roulages tests permettent de trouver autant de courbes de consommation spécifique CCS qu'il y a de tronçons testés.

Chaque courbe de consommation spécifique CCS peut être modélisée par un polynôme de second ordre pour lequel les variations de charge et décharge $\Delta SOE$ de la batterie de traction sont bornées entre un seuil minimal $\Delta SOE_{min}$ et un seuil maximal $\Delta SOE_{max}$, ce que l'on peut écrire :

$$\begin{cases} CC = \Psi_2 . \Delta SoE^2 + \Psi_1 . \Delta SoE + \Psi_0 \\ \Delta SoE \in [\, \Delta SoEmin \quad \Delta SoEmax ] \end{cases}$$

avec $\Psi_0$, $\Psi_1$, $\Psi_2$ les coefficients du polynôme.

Comme le montrent les courbes de la figure 4, pour simplifier cette modélisation, on peut faire l'estimation que les deux coefficients $\Psi_1$, $\Psi_2$ sont identiques d'une courbe à l'autre. On peut également observer que le seuil minimal $\Delta SOE_{min}$ dépend des trois coefficients du polynôme. Ainsi, seuls varient le coefficient $\Psi_0$ et le seuil maximal $\Delta SOE_{max}$. Ce sont donc ces deux valeurs qui permettent de caractériser chaque courbe de consommation spécifique CCS.

La figure 3 illustre alors des points dont les coordonnées correspondent à ces deux variables $\Psi_0$ et $\Delta SOE_{max}$. Elle montre la répartition des courbes de consommation spécifique CCS obtenues lors des roulages tests effectués. Ici, on considère que ces points sont répartis dans onze zones distinctes. Chaque zone est alors définie par son barycentre.

Ainsi, comme cela a été exposé supra, dans le procédé, on n'acquiert pas la courbe de consommation spécifique qui correspondrait exactement au tronçon considéré, mais on considère plutôt une des onze courbes de référence dont les variables $\Psi_0$ et $\Delta SOE_{max}$ correspondent au barycentre de l'une de ces onze zones.

A l'issue de la première opération, chaque tronçon $T^i$ est alors défini comme le montre la figure 2 par les paramètres $\Psi_0$, $\Psi_1$, $\Psi_2$, $\Delta SOE_{min}$, $\Delta SOE_{max}$ précités, ainsi que par la longueur $LL_i$ de chaque tronçon $T_i$ et par sa pente $RG_i$.

Comme cela a été expliqué supra, la courbe énergétique $CE_i$ sélectionnée ne tient compte ni de la pente du tronçon $T^i$, ni de la consommation en courant électrique des appareils auxiliaires (moteur de climatisation, ...), ni du comportement de conduite du conducteur (sportif, calme...), ni de tout autre facteur inconnu (baisse de pression des pneus, surcharge du véhicule...).

Afin de tenir compte de la pente de la route, il est prévu une seconde opération de correction de chaque courbe de référence $CE_i$ sélectionnée (c'est-à-dire de la courbe de référence $CE_i$ affectée à chaque tronçon $T^i$) en fonction des pentes $RG$ des tronçons.

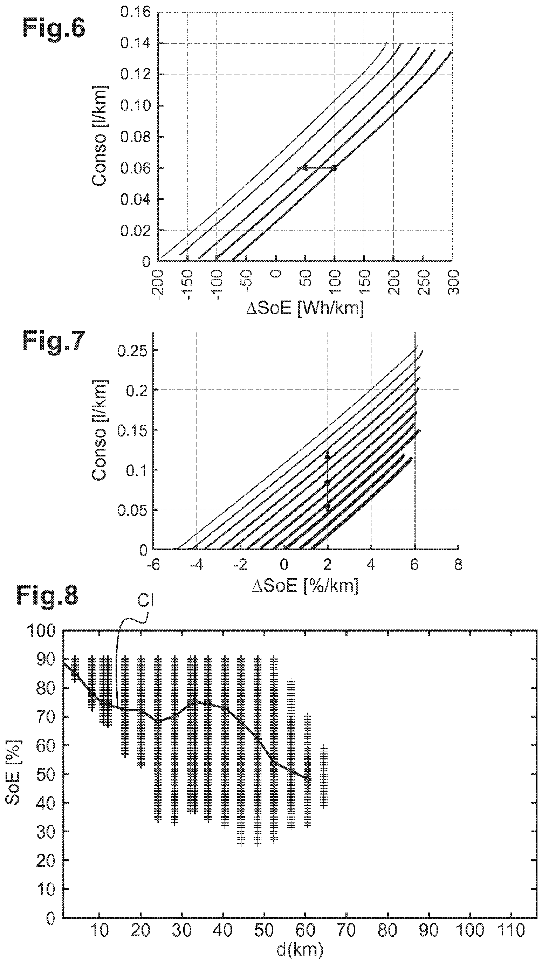

Comme le montre bien la figure 7, cette seconde opération de correction consiste simplement à décaler la courbe de référence $CE_i$ associée au tronçon $T^i$ vers le haut ou vers le bas (c'est-à-dire à charge ou décharge $\Delta SOE$ constante), d'une valeur fonction de la pente $RG$.

On comprend en effet que lorsque le tronçon de route considéré monte, la consommation en carburant va être plus élevée que celle prévue initialement. A contrario, lorsque le tronçon de route considéré descend, la consommation en carburant va être moins élevée que celle prévue initialement.

En outre, lors des phases de freinage, il sera possible de récupérer davantage d'énergie électrique en descente qu'en montée.

En pratique, cette seconde opération de correction consistera à corriger le paramètre $\Psi_0$ selon la formule suivante :

$$\Psi_0 + K.RG^i => \Psi_0$$

avec $K$ un coefficient dans la valeur dépend du modèle de véhicule considéré et de ses caractéristiques (à titre d'exemple, on pourra ici considérer $K = 0.01327 \; l. \; km^{-1}$).

Afin de tenir compte du type de conduite du conducteur du véhicule automobile, il est prévu une troisième opération de correction de chaque courbe de référence $CE_i$.

Le type de conduite pourra par exemple être paramétré par une variable dsmes. Cette variable pourra par exemple être initialement choisie égale à zéro puis elle pourra prendre des valeurs positives si la conduite est plutôt sportive, ou négative si la conduite est plutôt calme.

Comme le montre bien la figure 7, l'opération de correction de chaque courbe de référence $CE_i$ consiste

simplement à décaler la courbe de référence $CE_i$ associée à chaque tronçon $T^i$ vers le haut ou vers le bas (c'est-à-dire à charge ou décharge $\Delta SOE$ constante), d'une valeur fonction de la variable $dSmes$.

On comprend en effet que lorsque la conduite est sportive, la consommation en carburant va être plus élevée que celle prévue initialement. A contrario, lorsque la conduite est calme, la consommation en carburant va être moins élevée que celle prévue initialement.

En pratique, cette troisième opération de correction consistera à corriger le paramètre $\Psi_0$ selon la formule suivante :

$$\Psi_0 + ds_{mes} => \Psi_0.$$

Afin de tenir compte de la consommation en courant électrique des appareils auxiliaires, il est prévu une quatrième opération de correction de chaque courbe de référence $CE_i$ en fonction de la puissance électrique $paux_{mes}$ consommée par les appareils auxiliaires.

Comme le montre bien la figure 6, cette opération de correction consiste simplement à décaler la courbe de référence $CE^i_i$ associée au tronçon $T^i$ vers la gauche (c'est-à-dire à consommation en carburant constante), d'une valeur fonction de la puissance électrique $paux_{mes}$.

On comprend en effet que lorsque les appareils électriques sont utilisés, la charge de la batterie va être plus lente que prévue et la décharge de cette batterie va être plus rapide que prévue.

En pratique, l'étape de correction consistera à décaler la courbe de référence $CE_j$ d'une valeur $E_{AUX}$ calculée à partir de la formule suivante :

$$E_{AUX} = \frac{paux_{mes}}{\bar{v}}$$

où $\bar{v}$ représente la vitesse moyenne sur le tronçon (en km/h). Cette valeur peut être fournie directement par le système de géolocalisation et de navigation, en estimant qu'elle sera égale à la valeur de la vitesse du trafic ou à la vitesse moyenne statistique ou à la vitesse maximale autorisée.

A l'issue de cette quatrième opération, chaque tronçon $T^i$ est alors défini par les paramètres $\Psi^i_{0,est}$, $\Psi^i_{1,est}$, $\Psi^i_{2,est}$, $\Delta SOE^i_{min}$, $\Delta SOE^i_{max}$.

A ce stade, on pourra préciser que la manière précitée d'obtenir ces paramètres n'est donnée qu'à titre d'exemple. On pourrait notamment prévoir une solution n'utilisant pas de tableau tel que celui représenté sur la figure 5.

Ainsi, dans une variante plus générale, les coefficients $\Psi^i_{0,est}$, $\Psi^i_{1,est}$, $\Psi^i_{2,est}$ pourraient ainsi être calculés à l'aide du modèle énergétique calibré pendant la phase de mise au point de la stratégie (hors ligne), et on pourra écrire :

$$\Psi^i_{0,est} = f_0(cr^i_{est}, ds_{mes}, paux_{mes}),$$

$$\Psi^i_{1,est} = f_1(cr^i_{est}, ds_{mes}, paux_{mes}),$$

$$\Psi^i_{2,est} = f_2(cr^i_{est}, ds_{mes}, paux_{mes}),$$

Les relations $f_0$, $f_1$ et $f_2$ pourront par exemple provenir d'une modélisation d'un ensemble de catégories de consommation énergétique, où le choix d'une catégorie dépend de la probabilité que le segment de route y appartienne (comme dans le cas précité), mais ces catégories peuvent aussi être d'une tout autre nature.

Comme cela sera décrit dans la suite de cet exposé, une fois que le véhicule aura commencé à parcourir le trajet, il sera prévu une cinquième opération pour corriger les paramètres estimés jusque là, afin de tenir compte de tout autre facteur inconnu (baisse de pression des pneus, surcharge du véhicule...).

Puisqu'à ce stade, on considère que le véhicule n'a pas encore roulé, cette cinquième opération ne sera ici pas mise en œuvre et elle ne sera pas décrite. Elle sera en revanche décrite en détail infra.

La cinquième étape 104 du procédé consiste ensuite à déterminer, sur chaque courbe de référence $CE_j$ corrigée, le point optimal $P^i$ qui permettra ici de minimiser la consommation en carburant du véhicule automobile hybride sur l'ensemble du trajet et d'obtenir une décharge complète de la batterie de traction à l'issue dudit trajet.

Cette étape est ici effectuée au moyen d'un algorithme d'optimisation du type A*. Il s'agit d'un algorithme connu dans l'état de la technique et qui ne sera donc pas ici décrit en détail. On pourra toutefois expliquer brièvement son fonctionnement.

Pour cela, on se référera à la figure 8.

On y observe que pour chaque tronçon $T^i$ est tracée une série de points de passage par des états d'énergie SOE parallèle à l'axe des ordonnées, à une abscisse égale (en kilomètres) à la distance entre l'endroit où se trouve le véhicule et le point final du tronçon. Chaque point de cette ligne correspond à un état d'énergie SOE atteignable déduit à partir de la courbe de référence CEj associée à ce tronçon $T^i$. L'espace des états d'énergie SOE est discrétisée en un nombre fini de points.

L'ordonnée de chaque point est alors égal à l'état d'énergie SOE de la batterie de traction qu'il resterait à l'issue du tronçon $T^i$ si le véhicule était piloté selon le point correspondant de la courbe de référence CEj, compte tenu de la charge ou décharge appliquée à la batterie de traction.

Chaque point constitue donc un nœud n.

L'objectif de l'algorithme A* est alors de trouver le chemin CI qui permettra de minimiser la consommation en carburant du véhicule.

Le choix de l'ordre d'exploration des nœuds n est déterminé en tentant de minimiser une fonction k qui est la somme d'une fonction de coût g et d'une fonction heuristique h, comme le montre la formule suivante :

$$k(n)=g(n)+h(n)$$

où g(n) représente la quantité de carburant nécessaire pour arriver au nœud n depuis le nœud initial (début du trajet) sur la meilleur trajectoire disponible en fonction des choix de la charge ou décharge $\Delta$SOE à appliquer à la batterie sur les tronçons précédents, et

où h(n) représente une estimation optimiste de la quantité de carburant restante à consommer avec une charge ou décharge $\Delta$SOE qui pourrait être appliquée à la batterie de traction pour passer du nœud n au nœud final en considérant le cas d'une décharge linéaire de la batterie de traction depuis le nœud n.

La fonction k permet à l'algorithme d'explorer à chaque pas de calcul la trajectoire qui à la fois minimise le coût pour arriver au nœud courant mais aussi minimise le coût restant depuis ce nœud jusqu'à la fin du trajet.

Ainsi, l'utilisation de la fonction k incite cet algorithme à explorer les trajectoires les plus proches de la trajectoire optimale, cela limite l'exploration de trajectoires sous-optimales, ce qui lui permet d'obtenir de bons résultats en un minimum de pas de calcul.

La fonction illustrée sur la figure 8 et qui montre le chemin optimal passant par les points optimaux $P^i$ des courbes de référence CEj est notée SoE=f(d), avec d la distance parcourue depuis le départ du trajet.

Une fois le chemin optimal trouvé (passant par les points optimaux $P^i$), le calculateur élabore une consigne de gestion énergétique $SoE_{ref}$ en fonction des coordonnées des points optimaux P'.

Cette consigne de gestion énergétique est alors utilisée au cours du trajet par le calculateur afin de faire du suivi de trajectoire, de manière que l'état d'énergie SOE de la batterie de traction suive le chemin CI illustré sur la figure 8.

Plusieurs procédés permettent de réaliser un tel suivi. Un exemple est notamment bien illustré dans la demande de brevet FR2988674 déposée par la demanderesse, ou encore dans les documents WO2013150206 et WO2014001707.

Une fois que le véhicule a commencé à parcourir le trajet indiqué par le système de géolocalisation et de navigation, le calculateur répète en boucle les étapes 103 et 104 précitées, conjointement avec des étapes 105 à 109 qui vont maintenant être décrites en détail.

Cette répétition des étapes 103 et 104 va permettre d'optimiser la qualité de l'estimation de la consommation énergétique du véhicule sur le reste du trajet à parcourir, notamment grâce à la cinquième opération qui sera mise en œuvre au cours de l'étape 103.

Ainsi, au cours d'une sixième étape 105, le calculateur détermine une estimation de la consommation en carburant CCest et de la consommation électrique $\Delta SoE_{est}$ du véhicule sur une fenêtre temporelle passée et prédéterminée.

Cette fenêtre temporelle pourra par exemple correspondre à l'intervalle de temps qui a été nécessaire pour parcourir l'un des tronçons $T^i$ du trajet, ou une partie de l'un des tronçons, ou plusieurs tronçons.

A titre d'exemple, pour la clarté de l'exposé, on pourra considérer que cette fenêtre temporelle correspondra à la durée qui a été nécessaire pour parcourir les deux tronçons précédents, notés $T^{t-2}$, $T^{t-1}$ ($T^t$ désignant le tronçon que le véhicule est en train de parcourir).

Mais de manière préférentielle, la taille de la fenêtre sera choisie indépendamment de la longueur des tronçons. Il s'agira d'une durée qui permet d'enregistrer une consommation énergétique moyenne suffisamment stable, compatible avec la dynamique le modèle énergétique de prédiction.

Pour calculer en moyenne une estimation de la consommation en carburant CCest et de la consommation électrique $\Delta SoE_{est}$ du véhicule sur cette fenêtre temporelle, le calculateur se base sur les valeurs des points optimaux $P^i$ associés à ces tronçons. Le calculateur est alors en mesure de déterminer la courbe de consommation spécifique qui relie une estimation de la consommation en carburant CCest et une estimation de la consommation électrique $\Delta SoE_{est}$ du véhicule sur l'ensemble de la fenêtre temporelle choisie.

L'ordonnée à l'origine de cette courbe de consommation spécifique, notée $\Psi^*_{0,est}$ peut alors être calculée à l'aide de la relation mathématique suivante :

$$\Psi^*_{0,est} = CC_{est} - (\Psi_{2,mes} \cdot \Delta SoE_{est}^2 + \Psi_{1,mes} \cdot \Delta SoE_{est})$$

Puis, grâce aux capteurs équipant le véhicule, au cours d'étapes 107, 108 et 109, le calculateur est en mesure d'obtenir :

- de nouvelles mesures de la puissance électrique $paux_{mes}$ consommée par les appareils électriques auxiliaires, et du paramètre $ds_{mes}$ relatif au comportement de conduite du véhicule par le conducteur,
- une moyenne de la consommation réelle en carburant CCmes du moteur à combustion interne sur la fenêtre temporelle choisie, et
- une moyenne de la consommation électrique réelle $\Delta SoE_{mes}$ du véhicule sur ladite fenêtre temporelle.

De la même manière qu'expliqué ci-dessus, au cours d'une étape 106, le calculateur est en mesure de déterminer la courbe de consommation spécifique qui relie ces deux estimations de consommation réelle en carburant CCmes et de consommation électrique réelle $\Delta SoE_{mes}$.

L'ordonnée à l'origine de cette courbe, notée $\Psi^*_{0,mes}$ peut alors être calculée à l'aide de la relation mathématique suivante :

$$\Psi^*_{0,mes} = CC_{mes} - (\Psi_{2,mes} \cdot \Delta SoE_{mes}^2 + \Psi_{1,mes} \cdot \Delta SoE_{mes})$$

Ici encore, les coefficients $\Psi_{2,mes}$ et $\Psi_{1,mes}$ sont invariables et connus, si bien que le paramètre $\Psi^*_{0,mes}$ est facilement calculable.

On peut alors calculer une erreur $\Delta\Psi_{0,ext}$ entre les valeurs estimées au cours des étapes 103 et 104 et les valeurs mesurées. Cette erreur est obtenue à l'aide de la relation mathématique suivante :

$$\Delta\Psi_{0,ext} = \Psi^*_{0,mes} - \Psi^*_{0,est}$$

Cette erreur pourra alors être utilisée au pas de temps suivant, et plus précisément la prochaine fois que l'étape 103 sera mise en œuvre par le calculateur.

Pour cela, au cours de la cinquième opération définie supra, il sera prévu de corriger chaque courbe de référence CE' en fonction de ladite erreur $\Delta\Psi_{0,ext}$.

Comme le montre bien la figure 7, cette cinquième opération consistera simplement à décaler la courbe de référence CEj associée au tronçon $T^i$ vers le haut ou vers le bas (c'est-à-dire à charge ou décharge $\Delta SOE$ constante), d'une valeur fonction de l'erreur $\Delta\Psi_{0,ext}$.

En pratique, cette seconde opération de correction consistera à corriger le paramètre $\Psi_0$ selon la formule suivante :

$$\Psi_0 + \Delta\Psi_{0,ext} => \Psi_0$$

La présente invention n'est nullement limitée au mode de réalisation décrit et représenté, mais l'homme du métier saura y apporter toute variante conforme à l'invention telle que définie par les revendications.

En particulier, dans le cas où le système de géolocalisation et de navigation ne connaît pas la valeur d'un attribut d'un tronçon du trajet, on pourra prévoir :

- soit que le calcul des sommes de probabilités ne tienne pas compte des valeurs des probabilités affectées à cet attribut,
- soit que le calcul remplace la valeur inconnue par une valeur prédéterminée.

**Revendications**

1. Procédé de calcul d'une consigne de gestion de la consommation en carburant et en courant électrique d'un véhicule automobile hybride comportant au moins un moteur électrique alimenté en courant électrique par une batterie de traction, et un moteur à combustion interne alimenté en carburant, **caractérisé en ce qu'**il comprend des étapes de :

   a) acquisition, au moyen d'un système de navigation, d'un trajet à effectuer,
   b) division dudit trajet en tronçons ($T^i$, $i \in \{1...N\}$) successifs,
   c) acquisition, pour chaque tronçon ($T^i$), d'attributs (FC, SC, SL, TS, RG, LL NL, SMS) caractérisant ledit tronçon ($T^i$),
   d) pour chacun desdits tronçons ($T^i$) et compte tenu de ses attributs (FC, SC, SL, TS, RG, LL NL, SMS), acquisition d'une relation ($CE_j$) reliant la consommation estimée en carburant ($CC_{est}$) du véhicule automobile hybride sur le tronçon ($T^i$) à sa consommation estimée en énergie électrique ($\Delta SOE_{est}$),
   g) détermination d'un point optimal de consommation ($P_i$) dans chacune des relations ($CE_j$) corrigées, et
   h) élaboration d'une consigne de gestion énergétique tout le long du trajet, en fonction des coordonnées desdits points optimaux ($P_i$),

   le procédé étant **caractérisé en ce qu'**il comprend, préalablement à l'étape de détermination du point optimal de consommation, des étapes de :

   e) mesure de la consommation réelle en carburant ($CC_{mes}$) et la consommation réelle en énergie électrique ($\Delta SOE_{mes}$) du véhicule automobile,
   f) correction, compte tenu desdites consommations réelles en carburant ($CC_{mes}$) et en énergie électrique ($\Delta SOE_{mes}$), de chaque relation ($CE_j$).

2. Procédé de calcul selon la revendication précédente, dans lequel l'étape d) comporte la sélection, parmi une pluralité de relations prédéterminées ($CE_j$, $j \in \{1...M\}$) reliant des valeurs de consommation en carburant (CC) à des valeurs de consommation d'énergie électrique ($\Delta SOE$), de la relation ($CE_j$) qui correspond aux attributs (FC, SC, SL, TS, RG, LL NL, SMS) caractérisant ledit tronçon ($T^i$).

3. Procédé de calcul selon la revendication précédente, dans lequel les relations prédéterminées ($CE_j$) sont des polynômes et dans lequel l'étape f) consiste à réviser la valeur de l'ordonnée au point d'origine du polynôme sélectionné.

4. Procédé de calcul selon la revendication précédente, dans lequel la valeur de l'ordonnée du polynôme sélectionné est révisée en y ajoutant un variable ($\Delta\Psi_{0,ext}$) qui est égale à la différence entre, d'une part, la valeur de l'ordonnée au point d'origine ($\Psi^*_{0,mes}$) d'un polynôme reliant la consommation réelle en carburant ($CC_{mes}$) du véhicule automobile hybride à sa consommation réelle en énergie électrique ($\Delta SOE_{mes}$) sur au moins une partie d'un tronçon déjà emprunté ($T^{t-2, t-1}$), et d'autre part, la valeur de l'ordonnée au point d'origine ($\Psi^*_{0,est}$) du polynôme sélectionné sur ladite au moins une partie du tronçon déjà emprunté ($^{t-2, t-1}$).

5. Procédé de calcul selon l'une des deux revendications précédentes, dans lequel les polynômes sont de second ordre et dans lequel les variations de charge et décharge ($\Delta SOE$) de la batterie de traction sont bornées entre un seuil minimal ($\Delta SOE_{min}$) et un seuil maximal ($\Delta SOE_{max}$).

6. Procédé de calcul selon la revendication précédente, dans lequel lesdits polynômes présentent deux coefficients ($\Psi_1$, $\Psi_2$) invariables et une valeur d'ordonnée au point d'origine ($\Psi_0$) qui varie d'un polynôme à l'autre.

7. Procédé de calcul selon l'une des revendications 2 à 6, dans lequel, à l'étape d), la relation ($CE_j$) est sélectionnée indépendamment de la pente (RG) dudit tronçon ($T_i$), et dans lequel, préalablement à l'étape f), il est prévu une étape d1) de correction de ladite relation ($CE_j$) compte tenu de ladite pente (RG).

8. Procédé de calcul selon l'une des revendications 2 à 7, dans lequel, à l'étape d), la relation ($CE_j$) est sélectionnée indépendamment de la façon de conduire du conducteur du véhicule automobile, et dans lequel, préalablement à l'étape f), il est prévu une étape d3) de correction de ladite relation ($CE_j$) compte tenu d'un paramètre ($ds_{mes}$) relatif à ladite façon de conduire du conducteur du véhicule automobile.

9. Procédé de calcul selon l'une des revendications 2 à 8, dans lequel, à l'étape d), la relation ($CE_j$) est sélectionnée

indépendamment de la consommation en courant électrique d'appareils auxiliaires qui sont distincts du moteur électrique et qui sont alimentés en courant par la batterie de traction, et dans lequel, préalablement à l'étape f), il est prévu une étape d2) de correction de ladite relation ($CE_j$) compte tenu d'un paramètre ($paux_{mes}$) relatif à ladite consommation en courant électrique des appareils auxiliaires.

10. Procédé de calcul selon l'une des revendications précédentes, dans lequel à l'étape g), les points optimaux ($P_i$, $i \in \{1...N\}$) sont choisis de telle sorte qu'ils minimisent la consommation en carburant du véhicule automobile hybride sur l'ensemble du trajet et maximisent la décharge de la batterie de traction à l'issue dudit trajet.

**Patentansprüche**

1. Verfahren zur Berechnung eines Verwaltungssollwerts des Kraftstoff- und Stromverbrauchs eines Hybridkraftfahrzeugs, das mindestens einen von einer Antriebsbatterie mit Strom versorgten Elektromotor und einen mit Kraftstoff versorgten Verbrennungsmotor aufweist, **dadurch gekennzeichnet, dass** es Schritte aufweist der:

a) Erfassung, mittels eines Navigationssystems, einer auszuführenden Strecke,
b) Teilung der Strecke in aufeinanderfolgende Abschnitte ($T^i$, $i \in \{1...N\}$),
c) Erfassung, für jeden Abschnitt ($T^i$), von den Abschnitt ($T^i$) charakterisierenden Attributen (FC, SC, SL, TS, RG, LL NL, SMS),
d) für jeden der Abschnitte ($T^i$) und unter Berücksichtigung seiner Attribute (FC, SC, SL, TS, RG, LL NL, SMS), Erfassung einer Beziehung ($CE_j$), die den geschätzten Kraftstoffverbrauch ($CC_{est}$) des Hybridkraftfahrzeugs auf dem Abschnitt ($T^i$) mit seinem geschätzten Verbrauch elektrischer Energie ($\Delta SOE_{est}$) verbindet,
g) Bestimmung eines optimalen Verbrauchspunkts ($P_i$) in jeder der korrigierten Beziehungen ($CE_j$), und
h) Erarbeitung eines Energieverwaltungssollwerts entlang der ganzen Strecke, abhängig von den Koordinaten der optimalen Punkte ($P^i$),

wobei das Verfahren **dadurch gekennzeichnet ist, dass** es vor dem Schritt der Bestimmung des optimalen Verbrauchspunkts Schritte enthält der:

e) Messung des tatsächlichen Kraftstoffverbrauchs ($CC_{mes}$) und des tatsächlichen Verbrauchs elektrischer Energie ($\Delta SOE_{mes}$) des Kraftfahrzeugs,
f) Korrektur jeder Beziehung ($CE_j$) unter Berücksichtigung des tatsächlichen Kraftstoffverbrauchs ($CC_{mes}$) und Verbrauchs elektrischer Energie ($\Delta SOE_{mes}$).

2. Rechenverfahren nach dem vorhergehenden Anspruch, wobei der Schritt d) die Auswahl, unter einer Vielzahl vorherbestimmter Beziehungen ($CE_j$, $j \in \{1...M\}$), die Verbrauchswerte von Kraftstoff (CC) mit Verbrauchswerten von elektrischer Energie ($\Delta SOE$) verbinden, der Beziehung ($CE_j$) aufweist, die den Attributen (FC, SC, SL, TS, RG, LL NL, SMS) entspricht, die den Abschnitt ($T^i$) charakterisieren.

3. Rechenverfahren nach dem vorhergehenden Anspruch, wobei die vorherbestimmten Beziehungen ($CE_j$) Polynome sind, und wobei der Schritt f) darin besteht, den Wert der Ordinate am Ausgangspunkt des ausgewählten Polynoms zu revidieren.

4. Rechenverfahren nach dem vorhergehenden Anspruch, wobei der Wert der Ordinate des ausgewählten Polynoms revidiert wird, indem eine Variable ($\Delta \Psi_{0,ext}$) hinzugefügt wird, die gleich der Differenz zwischen einerseits dem Wert der Ordinate am Ausgangspunkt ($\Psi^*_{0,mes}$) eines den tatsächlichen Kraftstoffverbrauch ($CC_{mes}$) des Hybridkraftfahrzeugs mit seinem tatsächlichen Verbrauch an elektrischer Energie ($\Delta SOE_{est}$) über mindestens einen Teil eines bereits gefahrenen Abschnitts ($T^{t-2,t-1}$) verbindenden Polynoms und andererseits dem Wert der Ordinate am Ausgangspunkt ($\Psi^*_{0,mes}$) des ausgewählten Polynoms auf dem mindestens einen Teil des bereits gefahrenen Abschnitts ($T^{t-2,t-1}$) ist.

5. Rechenverfahren nach einem der zwei vorhergehenden Ansprüche, wobei die Polynome zweiter Ordnung sind und wobei die Lade- und Entladeänderungen ($\Delta SOE$) der Antriebsbatterie zwischen einer minimalen Schwelle ($\Delta SOE_{min}$) und einer maximalen Schwelle ($\Delta SOE_{max}$) begrenzt sind.

6. Rechenverfahren nach dem vorhergehenden Anspruch, wobei die Polynome zwei unveränderbare Koeffizienten ($\Psi_1$, $\Psi_2$) und einen Ordinatenwert am Ausgangspunkt ($\Psi_0$) aufweisen, der sich von einem Polynom zum anderen ändert.

7. Rechenverfahren nach einem der Ansprüche 2 bis 6, wobei im Schritt d) die Beziehung (CE$_j$) unabhängig vom Gefälle (RG) des Abschnitts (T$^i$) gewählt wird, und wobei vor dem Schritt f) ein Schritt d1) der Korrektur der Beziehung (CE$_j$) unter Berücksichtigung des Gefälles (RG) vorgesehen ist.

8. Rechenverfahren nach einem der Ansprüche 2 bis 7, wobei im Schritt d) die Beziehung (CE) unabhängig von der Fahrweise des Fahrers des Kraftfahrzeugs gewählt wird, und wobei vor dem Schritt f) ein Schritt d3) der Korrektur der Beziehung (CE$_j$) unter Berücksichtigung eines Parameters (ds$_{mes}$) bezüglich der Fahrweise des Fahrers des Kraftfahrzeugs vorgesehen ist.

9. Rechenverfahren nach einem der Ansprüche 2 bis 8, wobei im Schritt d) die Beziehung (CE$_j$) unabhängig vom Stromverbrauch von Hilfsgeräten gewählt wird, die sich vom Elektromotor unterscheiden und die von der Antriebsbatterie mit Strom versorgt werden, und wobei vor dem Schritt f) ein Schritt d2) der Korrektur der Beziehung (CE$_j$) unter Berücksichtigung eines Parameters (paux$_{mes}$) bezüglich des Stromverbrauchs der Hilfsgeräte vorgesehen ist.

10. Rechenverfahren nach einem der vorhergehenden Ansprüche, wobei im Schritt g) die optimalen Punkte (P$^i$, i$\in${1...N}) so ausgewählt werden, dass sie den Kraftstoffverbrauch des Hybridkraftfahrzeugs über die Gesamtheit der Strecke minimieren und die Entladung der Antriebsbatterie am Ende der Strecke maximieren.

## Claims

1. Method for calculating a management setpoint for the consumption of fuel and of electric current by a hybrid motor vehicle comprising at least one electric motor supplied with electric current by a traction battery, and an internal combustion engine supplied with fuel, **characterized in that** it comprises steps of:

   a) acquiring, by means of a navigation system, a journey to be made,
   b) dividing said journey into successive sections (T$^i$, i$\in${1...N}),
   c) acquiring, for each section (T$^i$), attributes (FC, SC, SL, TS, RG, LL NL, SMS) characterizing said section (T$^i$),
   d) for each of said sections (T$^i$) and given its attributes (FC, SC, SL, TS, RG, LL NL, SMS), acquiring a relationship (CE$_j$) linking the estimated fuel consumption (CC$_{est}$) of the hybrid motor vehicle on the section (T$^i$) to its estimated electrical energy consumption ($\Delta SOE_{est}$),
   g) determining an optimal consumption point (P$_i$) in each of the corrected relationships (CE$_j$), and
   h) creating an energy management setpoint throughout the journey, based on the coordinates of said optimal points (P$_i$),

   the method being **characterized in that** it comprises, prior to the step of determining the optimal consumption point, steps of:

   e) measuring the real fuel consumption (CC$_{mes}$) and the real electrical energy consumption ($\Delta SOE_{mes}$) of the motor vehicle,
   f) correcting each relationship (CE$_j$), given said real fuel consumption (CC$_{mes}$) and real electrical energy consumption ($\Delta SOE_{mes}$).

2. Calculation method according to the preceding claim, wherein step d) comprises selecting, from among a plurality of predetermined relationships (CE$_j$, j$\in${1...M}) linking fuel consumption values (CC) to electrical energy consumption values ($\Delta SOE$), the relationship (CE$_j$) that corresponds to the attributes (FC, SC, SL, TS, RG, LL NL, SMS) characterizing said section (T$^i$).

3. Calculation method according to the preceding claim, wherein the predetermined relationships (CE$_j$) are polynomials and wherein step f) consists in revising the value of the ordinate at the point of origin of the selected polynomial.

4. Calculation method according to the preceding claim, wherein the value of the ordinate of the selected polynomial is revised by adding thereto a variable ($\Delta\psi_{0,ext}$) that is equal to the difference between, on the one hand, the value of the ordinate at the point of origin ($\psi^*_{0,mes}$) of a polynomial linking the real fuel consumption (CC$_{mes}$) of the hybrid motor vehicle to its real electrical energy consumption ($\Delta SOE_{mes}$) on at least part of a section that has already been travelled (T$^{t-2, t-1}$) and, on the other hand, the value of the ordinate at the point of origin ($\psi^*_{0,est}$) of the selected polynomial on said at least one part of the section that has already been travelled ($T^{t-2,\,t-1}$).

5. Calculation method according to either of the two preceding claims, wherein the polynomials are second-order polynomials and wherein the charge and discharge variations ($\Delta SOE$) of the traction battery are bounded between a minimum threshold ($\Delta SOE_{min}$) and a maximum threshold ($\Delta SOE_{max}$).

6. Calculation method according to the preceding claim, wherein said polynomials have two invariable coefficients ($\psi_1$, $\psi_2$) and an ordinate value at the point of origin ($\psi_0$) that varies from one polynomial to another.

7. Calculation method according to one of Claims 2 to 6, wherein, in step d), the relationship ($CE_j$) is selected independently of the gradient (RG) of said section ($T_j$), and wherein, prior to step f), provision is made for a step d1) of correcting said relationship ($CE_j$) given said gradient (RG).

8. Calculation method according to one of Claims 2 to 7, wherein, in step d), the relationship ($CE_j$) is selected independently of the driving style of the driver of the motor vehicle, and wherein, prior to step f), provision is made for a step d3) of correcting said relationship ($CE_j$) given a parameter ($ds_{mes}$) relating to said driving style of the driver of the motor vehicle.

9. Calculation method according to one of Claims 2 to 8, wherein, in step d), the relationship ($CE_j$) is selected independently of the electric current consumption of auxiliary apparatuses that are distinct from the electric motor and that are supplied with current by the traction battery, and wherein, prior to step f), provision is made for a step d2) of correcting said relationship ($CE_j$) given a parameter ($paux_{mes}$) relating to said electric current consumption of the auxiliary apparatuses.

10. Calculation method according to one of the preceding claims, wherein, in step g), the optimal points ($P_i$, $i \in \{1...N\}$) are chosen such that they minimize the fuel consumption of the hybrid motor vehicle over the whole journey and maximize the discharging of the traction battery at the end of said journey.

# Fig.1

| T1 | | T2 | | T3 | | | ... | TN | |
|---|---|---|---|---|---|---|---|---|---|
| | | | | | | | | | |
| Attribut | Valeur | Attribut | Valeur | Attribut | Valeur | | | Attribut | Valeur |
| FC | 2 | FC | 3 | FC | 6 | | | FC | 1 |
| SC | 5 | SC | 4 | SC | 1 | | | SC | 6 |
| SL | 70 km/h | SL | 60 km/h | SL | 130 km/h | | | SL | 30 km/h |
| TS | 43 km/h | TS | 74 km/h | TS | 97 km/h | | | TS | 35 km/h |
| RG | 3% | RG | -5% | RG | 0% | | | RG | 0% |
| LL | 12km | LL | 8km | LL | 29km | | | LL | 1km |

# Fig.2

| T1 | T2 | T3 | ... | TN |
|---|---|---|---|---|
| | | | | |
| $\psi_2^1$ | $\psi_2^2$ | $\psi_2^3$ | | $\psi_2^N$ |
| $\psi_1^1$ | $\psi_1^2$ | $\psi_1^3$ | | $\psi_1^N$ |
| $\psi_0^1$ | $\psi_0^2$ | $\psi_0^3$ | | $\psi_0^N$ |
| $\Delta SoEmin^1$ | $\Delta SoEmin^2$ | $\Delta SoEmin^3$ | | $\Delta SoEmin^N$ |
| $\Delta SoEmax^1$ | $\Delta SoEmax^2$ | $\Delta SoEmax^3$ | | $\Delta SoEmax^N$ |
| $RG^1$ | $RG^2$ | $RG^3$ | | $RG^N$ |
| $LL^1$ | $LL^2$ | $LL^3$ | | $LL^N$ |

Fig.3

**Fig.4**

CC [/km]

0.18
0.16
0.14
0.12
0.1
0.08
0.06
0.04
0.02
0

-150 -100 -50 0 50 100 150 200 250 300 350

ΔSoE [Wh/km]

**Fig.5**

| Attributs nom | valeur | CE$_1$ | CE$_2$ | CE$_3$ | CE$_4$ | ... | CE$_{11}$ |
|---|---|---|---|---|---|---|---|
| FC | 1 | | | | | | |
| FC | 2 | a$_1$ | a$_2$ | a$_3$ | a$_4$ | ... | a$_{11}$ |
| FC | ... | | | | | | |
| FC | 6 | | | | | | |
| SC | 1 | | | | | | |
| SC | 2 | | | | | | |
| SC | ... | | | | | | |
| SC | 6 | b$_1$ | b$_2$ | b$_3$ | b$_4$ | ... | b$_{11}$ |
| SL | 30 | c$_1$ | c$_2$ | c$_3$ | c$_4$ | ... | c$_{11}$ |
| SL | ... | | | | | | |
| SL | 130 | | | | | | |
| NL | 1 | | | | | | |
| NL | 2 | d$_1$ | d$_2$ | d$_3$ | d$_4$ | ... | d$_{11}$ |
| NL | ≥3 | | | | | | |
| SMS | <20 | | | | | | |
| SMS | 20-40 | | | | | | |
| SMS | 40-60 | | | | | | |
| SMS | 60-80 | e$_1$ | e$_2$ | e$_3$ | e$_4$ | ... | e$_{11}$ |
| SMS | 80-100 | | | | | | |
| SMS | >100 | | | | | | |
| TS | <20 | | | | | | |
| TS | 20-40 | | | | | | |
| TS | 40-60 | f$_1$ | f$_2$ | f$_3$ | f$_4$ | ... | f$_{11}$ |
| TS | 60-80 | | | | | | |
| TS | 80-100 | | | | | | |
| TS | >100 | | | | | | |

TAB

**Fig.6**

**Fig.7**

**Fig.8**

# Fig.9

```
        ┌─────────┐              ┌─────────┐
        │   100   │─────────────▶│   101   │
        └─────────┘              └─────────┘
                                      │
                                      ▼
                                 ┌─────────┐
                                 │   102   │
                                 └─────────┘
                                      │ cr$^i_{est}$
                                      ▼
```

cr$_{mes}$
ds$_{mes}$
paux$_{mes}$

```
┌─────────┐       ┌─────────┐                    ┌─────────┐  paux$_{mes}$
│   107   │──────▶│         │                    │   103   │◀──
└─────────┘       │         │───────────────────▶│         │  ds$_{mes}$
                  │         │                    └─────────┘
  ΔSoE$_{mes}$    │   106   │ Δψ$_{0,ext}$            │ ψ$^i_{0,est}$
┌─────────┐       │         │                        │ ψ$^i_{1,est}$
│   108   │──────▶│         │                        │ ψ$^i_{2,est}$
└─────────┘       │         │                        │ ΔSoE$^i_{min}$
                  │         │                        │ ΔSoE$^i_{max}$
  CC$_{mes}$      │         │                        ▼
┌─────────┐       │         │                   ┌─────────┐
│   109   │──────▶│         │                   │   104   │
└─────────┘       └─────────┘                   └─────────┘
                      │ ▲                             │ SoE= f(d)
              CC$_{est}$ │                            ▼
              ΔSoE$_{est}$                       ┌─────────┐
                        └───────────────────────│   105   │◀──
                                                 └─────────┘
                              │
                              ▼
              ┌─────────────────────────────────┐
              │              110                 │
              └─────────────────────────────────┘
                              │ SoE$_{ref}$
                              ▼
```

21

## RÉFÉRENCES CITÉES DANS LA DESCRIPTION

**Documents brevets cités dans la description**

- US 8825243 B
- FR 1556271
- WO 2014177786 A1
- FR 2988674
- WO 2013150206 A
- WO 2014001707 A